(19) Europäisches Patentamt
European Patent Office
Office européen des brevets

(11) Publication number: 0 149 782 B1

# (12) EUROPEAN PATENT SPECIFICATION

(45) Date of publication of patent specification: 02.11.88

(51) Int. Cl.$^4$: C 08 L 51/06, C 08 K 3/34, C 08 K 9/04, C 08 F 255/02, B 29 C 47/00

(21) Application number: 84115095.6

(22) Date of filing: 10.12.84

## (54) Crosslinkable polyolefin compositions containing crystalline zeolites.

(30) Priority: 12.12.83 IT 2412183
09.03.84 IT 1996784
27.04.84 IT 2070284

(43) Date of publication of application:
31.07.85 Bulletin 85/31

(45) Publication of the grant of the patent:
02.11.88 Bulletin 88/44

(84) Designated Contracting States:
BE DE FR GB NL

(56) References cited:
EP-A-0 007 608
EP-A-0 085 968

KAUTSCHUK + GUMMI KUNSTSTOFFE, vol. 34, no. 3, March 1981, pages 197-206, Heidelberg, DE; H. VOIGT: "Über das Vernetzen von Polyolefinen"

The file contains technical information submitted after the application was filed and not included in this specification

(73) Proprietor: Gimpel, Franco
Via F. Nullo 18
Milano (IT)

(72) Inventor: Gimpel, Franco
via Nullo 18
I-20129 Milano (IT)
Inventor: Brichta, Corrado
via Losanna 36
I-20154 Milano (IT)

(74) Representative: Gervasi, Gemma, Dr. et al
Studio Brevetti e Marchi NOTARBARTOLO & GERVASI 33, Viale Bianca Maria
I-20122 Milano (IT)

EP 0 149 782 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

It is known to crosslink polyethylene and other olefin polymers by siloxane crosslinking whereby in a first step unsaturated hydrolizable silanes age grafted on the polyolefin chain, usually in an extruder at temperatures above 140°C and in the presence of free radical initiators such as dicumyl peroxide, and subsequently the grafted polymer is exposed to moisture in the presence of a silanol condensation catalyst. Similar processes are described in GB—A—1.234.034, GB—A—1.286.460 and US—A—3.646.155. This method requires long cross-linking times, due to the low rate of diffusion of water through the polymer, and shaped articles of only very limited thickness can be obtained.

It is also known that silane-modified polyolefins can be cross-linked in the presence of a compound capable of releasing water when said compound is heated by the polymeric mass during shaping of the same GB—A—1.581.041).

This method, which attempts to avoid the above mentioned long time curing step during which the shaped article is exposed to moisture, has the disadvantage that the water is released in an uncontrolled manner while the polymer is heated to a high temperature, and is therefore in a fluid state, with the consequence of premature crosslinking which adversely affects the following shaping operation.

The present invention concerns the use of compositions comprising polyolefins, which have been modified by grafting onto them hydrolyzable unsaturated silanes, and containing zeolites in powder form, wherein at least 80% by weight of the particles have a dimension between 1 and 15 micrometers, the zeolite amount being of 0.5 to 10 parts by weight per 100 parts of polyolefin, said compositions being shapeable into compact or foamed articles which can be crosslinked, after shaping by exposure to humidity and/or microwaves.

With the crosslinkable polymer compositions according to the present invention the shaped articles are crosslinked in a very short time and are not limited to small thicknesses as is the case of the known processes for silane crosslinking.

The polyolefins to which the present invention can be applied include homopolymers and copolymers of ethylene and propylene such as, for example:

— high, medium and low density polyethylene,
— copolymers of ethylene and propylene and/or mono-olefins (e.g., Butene-1, Hexene-1),
— ethylene-vinylacetate and ethylene-acrylate copolymers,
— thermoplastic rubbers consisting of ethylene-propylene copolymer or ethylene/propylene/diene terpolymer.

The silane-grafted olefin polymers used for the compositions in accordance with the present invention have a hydrolyzable silane content of 1% to 5% by weight, referred to the polymer, and preferably between 1.5% and 3%. For the purpose of this invention the term "zeolite" refers to the synthetic crystalline aluminium silicates of one or more alkaline or alkali-earth metals as defined by D. W. Breck in "Zeolite Molecular Sieves" Wiley Interscience (1974) pages 133 to 180.

Such zeolites correspond to the general formula:

$$Me_{2/x}O \cdot Al_2O_3 \cdot YSiO_2 \cdot ZH_2O$$

where:

Me is a metal, preferably an alkaline or alkali-earth metal,
x is the valency of the metal,
y is the $SiO_2/Al_2O_3$ ratio which can vary, for a given type of zeolite as follows:
y=1.8—2.1 for zeolite A,
y=2—3 for zeolite X,
y=3—6 for zeolite Y,
and for certain types of zeolite Y can reach 100,
z is the degree of hydration of the zeolite which can vary from 0 to 9 according to the type of zeolite.

The synthetic zeolite powders used in accordance with the present invention can be chosen among:

— type 3A, 4A and 5A zeolites, these type A zeolites in the hydrated state correspond to the typical formula:

$$Na_2O \cdot Al_2O_3 \cdot 2SiO_2 \cdot 4.5H_2O$$

where the $Na^+$ cation in the three-dimensional crystalline structure can be replaced, also partially, by other cations such as $K^+$ (zeolite 3A) or $Ca^{++}$ (zeolite 5A).

— type X zeolites, preferably zeolite NaX, type X zeolites in the hydrated state correspond to the typical formula:

$$Na_2O \cdot Al_2O_3 \cdot 2.4SiO_2 \cdot 6H_2O$$

— type Y zeolites which, in the hydrated state, correspond to the typical formula:

$$Na_2O \cdot Al_2O_3 \cdot 4.8SiO_2 \cdot 8.9H_2O$$

— Zeolite P has the same structure as synthetic Phillipsite or as zeolite B and can be synthesized in accordance with FR—B—1.213.628.

— Hydroxy sodalite is represented by the formula:

$$Na_2O \cdot Al_2O_3 \cdot 2SiO_2 \cdot 2.5H_2O$$

Naturally one can also employ a mixture of the above zeolites.

The zeolites in powder form used in accordance with the present invention can also include molecular sieves obtained from the corresponding hydrated zeolites by activation by means of heat treatment with consequent partial or total dehydration.

In a particular embodiment of the present

invention one can also use hydrated zeolites which are then activated by heat treatment during the processing of the polyolefin material possibly, but not necessarily, applying vacuum during extrusion.

In special cases, such as the production of foamed materials, hydrated zeolites may be used to cause a certain degree of premature crosslinking during shaping thus allowing the viscosity of the molten composition to be controlled so that foaming with physical blowing agents is carried out in optimum conditions.

The particle distribution of the zeolite powders used in accordance with the present invention must be quite narrow so that at least 80% by weight of the particles have a dimension between 1 and 15 micrometers and preferably an average size around 2—4 micrometers (determined for instance by Coulter Count method).

The quantity of zeolite used is between 0.5% and 10% by weight on the olefin polymer.

In a particularly advantageous embodiment of this invention the activated zeolite is added to the polymeric composition during the grafting of the original polyolefin i.e. by grafting the alkoxy-vinyl-silane in the presence of the activated zeolite.

More specifically, the silane can be supported on the zeolite as a pre-prepared dispersion obtained by grinding and homogenizing the zeolite powder with the silane in which the grafting initiator can also be dissolved. The dispersion is then mixed with the original polyolefin and the peroxide grafting initiator, if this has not been already added to the dispersion. It has been found that this method has the following advantages:

— the zeolite considerably improves the mixing and homogenization of the alkoxy-vinyl-silane with the original polyolefin,

— the premature hydrolysis of the unsaturated alkoxy silanes is avoided which is normally caused by the presence of humidity, before the silanes are grafted on to the polyolefin,

— the grafting of the silanes on to the polyolefin is more uniform.

The unsaturated alkoxy silanes contained in the combination with zeolite can be grafted on to the polyolefin using conventional methods such as, for example, uniformly mixing together in a high speed mixer, suitable for powders, such as a Henschel mixer, the polyolefin and the silane-zeolite combination together with the grafting catalyst and other additives.

This uniform mixture is then fed, for example, to an extruder in which the components are first homogenised followed by the grafting reaction at temperatures comprised between 160—250°C, preferably 180—220°C.

Conventional peroxide grafting initiators are used. The unsatured hydrolizable silanes which can be used for the purpose of the present invention are those generally used in the known methods for crosslinking of polyolefins such as vinyl trimethoxysilane, vinyl triethoxysilane, gamma-methacryloxypropyl trimethoxy-silane and others such as vinyl triacetoxysilane, vinyl methyldimethoxysilane etc.

The suitable types of silanes are defined, for example, in US—A—3.646.155.

In a further embodiment of the present invention, cross-linking co-agents may also be used consisting of arylcarboxylic or arylsulphonic acids having a melting point higher than that of the polymer used and which are preferably carried on the zeolite.

The quantity of arylcarboxylic or arylsulphonic acid to be used as crosslinking co-agent is of the order of 1 to 25 parts by weight of acid for 100 parts by weight of zeolite or of mixture of zeolites, preferably 2 to 4 parts. Suitable arylcarboxylic acids which can be used are given on US—A—3.367.926 and 3.207.737 and are known, in the form of their salts, to exert a nucleating effect on crystalline polymers.

In this context the following acids may be listed: p tert-butylbenzoic acid, benzoic acid, toluic acid, p.ethoxy and p.methoxy benzoic acids, salycilic acid, naphthoic acid, difenil-propionic acid and phthalic acid. In accordance with the present invention, the crosslinkable compositions may also contain known silanol condensation catalysts such as organic compounds of tin such as for example, dibutyltin dilaurate.

In an embodiment of the present invention the zeolite and possibly also the co-agent and/or the catalyst may be added, either together or individually, before or during shaping through suitable nozzles on the extruder barrel which allow these additives to be fed into the molten polymer and to be mixed with this.

Both the zeolite and the crosslinking co-agent as well as, possibly, also the catalyst, may be added in the form of a concentrated Masterbatch with the starting polyolefin. The polymeric compositions of the present invention are shaped in accordance with known methods such as extrusion, extrusion-expansion with physical blowing agents, injection molding etc. Subsequently the shaped articles are crosslinked, in accordance with the present invention, by one of the following processes:

a) exposure to humidity in the form of a water, steam or moist gases,

b) radiation with electromagnetic microwaves, optionally after a preheating step.

The microwaves used in conformity with the present invention have frequencies from $10^9$ and $10^{12}$ Hz.

The microwave exposure times which are required to effect crosslinking depend on the power transmitted, the concentration of zeolite in the shaped article and on the temperature of the shaped article when this is exposed to radiation. In fact it may be convenient to expose to radiation articles which have been pre-heated to a temperature which naturally depends on the type of polymer being processed and which generally is of the order of 100°C. Generally an exposure time of a few minutes is sufficient. Conventional microwave generators may be used such as those used

for peroxide crosslinking of olefin polymers. The compositions in accordance with this invention may contain various additives such as antioxydants, stabilizers, fire retardants, blowing agents, fillers, pigments etc. as used in the known processes for crosslinking silane grafted polyolefins.

The compositions in accordance with the present invention allow the following advantages to be realized:

— crosslinking can be effected rapidly and with low investment cost,

— shaped articles can be obtained without limitations to thickness,

— dimensional stability of the articles after shaping,

— absence of voids and porous areas,

— improved quality foamed and crosslinked articles can be obtained,

— low energy consumption.

The present invention is illustrated in the following examples which should not be considered to limit the application of said invention.

Example 1 (reference test)

100 parts by weight of high density Polyethylene (HDPE) granules (commercially denominated Marlex EHM 6001® produced by Phillips with a density of 0.96 and a Melt Flow Index=0.15 g/10 min. ASTM D1238/E) are uniformly mixed with 3 parts by weight of vinyl-triethoxysilane (produced by Union Carbide Corp., denominated organofunctional silano A 151) in which 0.12 parts by weight of dicumyl peroxide have been previously dissolved.

The mixture is now extruded in a twin screw Werner & Pfleiderer ZK-28 laboratory extruder, equipped with interpenetrating screws, both revolving in the same sense, at tempertures of 165 to 185°C and then granulated with air cooling.

The grafted base resin thus obtained had a MFI=1.98 g/10 min. ASTM D1238/F.

A 1% silanol condensation catalyst Masterbatch is prepared separately by blending 100 parts of the same ungrafted HDPE mentioned previously with one part of dibutyltin dilaurate and 0.12 parts of cumylperoxide. After extruding and granulating this composition, a product is obtained having a Melt Flow Index=1.9 g/10 min. ASTM D1238/F.

95 parts by weight of the grafted base resin in granules are dry mixed for about 20 min. with 5 parts by weight of the above mentioned catalyst Masterbatch and then granulated in an extruder.

The crosslinkable granule thus obtained as a M.F. Index=0.56 g/10 min. ASTM D1238/F and no significant insoluble gel formation is observed after xylene extraction of a sample.

By compression moulding of the crosslinkable granules a 2 mm thick sheet is obtained from which 20×20 mm samples are cut. These are preheated in an oven to about 100°C and then placed in a microwave oven (Phillips type 2010 C from which the rotating plate has been removed). The samples are exposed to radiation by microwaves having a frequency of 2450 MHZ and an output power of 2.1 KW for 4 minutes. After cooling the samples, the insoluble gel content is measured as above and is found to be not significant.

Example 2

One proceeds as stated in Example 1 (reference test) except that the crosslinkable composition is obtained from: 95 parts by weight of grafted base resin in granules, having MFI=1.98 g/10 min., obtained as in Example 1, and 4 parts by weight of 4A zeolite in powder form (commercial product Sipernat 44® manufactured by Degussa). The ingredients are mixed, extruded and granulated. The granulated crosslinkable product has a M.F. Index=0.5 g/10 min. ASTM D1238/F.

By compression moulding, as in Example 1, 20×10 mm samples are obtained which are preheated to about 100°C and are then exposed to microwave radiation for 4 minutes. The radiated samples have an insoluble gel content of 65% after extraction with xylene.

Example 3 (reference test)

100 parts by weight of high density Polyethylene (HDPE) granules (commercially denominated Marlex EHM 6001® produced by Phillips with a density of 0.96 and a Melt Flow Index=0.15 g/10 min. ASTM D1238/E) are uniformly mixed with 3 parts by weight of vinyl-triethoxysilane (produced by Union Carbide Corp., denominated organofunctional silane A 151) in which 0.12 parts by weight of dicumyl peroxide have been previously dissolved.

The mixture is now extruded in a twin screw Werner & Pfleiderer ZK-28 laboratory extruder, equipped with interpenetrating screws, both revolving in the same sense, at temperature of 165° to 220°C and then granulated with air cooling.

The grafted base resin thus obtained had a MFI=1.98 g/10 min. ASTM D1238/F.

The grafting yield measured on a sample extracted with boiling toluene and then analyzed by vapor phase chromatography was found to be 75% by weight.

A 1% silanol condensation catalyst Masterbatch is prepared separately by blending 100 parts of the same ungrafted HDPE mentioned previously with one part of dibutyltin dilaurate and 0.12 parts of cumylperoxide. After extruding and granulating this composition, a product is obtained having a Melt Flow Index=1.9 g/10 min. ASTM D1238/F. 95 parts by weight of the grafted base resin in granules are dry mixed for about 20 min. with 5 parts by weight of the above mentioned catalyst Masterbatch and then granulated in an extruder.

The crosslinkable granule thus obtained has a M.F. Index=0.56 g/10 min. ASTM D1238/F and no significant insoluble gel formation is observed after xylene extraction of a sample.

By compression moulding of the crosslinkable granule a 2 mm thick sheet is obtained from which 20×20 mm samples are cut. These are then

crosslinked by exposure to steam at 100°C for 48 hours.

On these samples the Swelling Index Q and the insoluble gel content are determined by extracting a sample piece of weight $W_A$ in boiling xylene for 20 hours.

If $W_Q$ is the weight of the sample piece after extraction and $W_E$ is the weight of the same after drying for 8 hours at 140°C, then:

$$\text{Swelling index } Q=\frac{W_Q}{W_E}$$

$$\text{Insoluble gel content } G=\frac{W_E}{W_A}\cdot 100\%$$

In this example the results are:

Swelling index Q=12

Insoluble gel content G=68%

Example 4

A) Preparation of the combination of unsaturated alkoxy silane and zeolite

100 parts by weight of activated zeolite 4A in powder form (commercially denominated Baylith T® produced by Bayer A.G.) and 100 parts by weight of vinyl triethoxysilane (commercially denominated Organo Functional Silane A 151 produced by Union Carbide) in which 5 parts by weight of dicumyl peroxide have previously been dissolved, are dispersed and homogenized in a 1 liter ball mill for 10—20 minutes.

B) Grafting and crosslinking

100 parts by weight of HDPE (Marlex EHM 6001® as in Example 3) are uniformly mixed for 30 seconds in a Henschel rapid mixer at 2000 RPM with 5 parts by weight of the above silane-zeolite combination and with 0.05 parts by weight of Irganox 1010 antioxidant.

The composition is now extruded in a twinscrew Werner-Pfleiderer extruder as in Example 3 and then granulated. On a sample of this grafted resin the grafting yield is determined as in Example 3 and is found to be 83% by weight. A Masterbatch of crosslinking coagent is prepared separately consisting of 99 parts by weight of the same HDPE described above and 1 part by weight of p.tert.butylbenzoic acid. 95 parts by weight of the grafted resin are now tumble mixed for 20 minutes with 5 parts by weight of the above Masterbatch and the mixture is then granulated in an extruder.

From the grafted granules thus obtained samples are made by compression molding, as in Example 3, and are then crosslinked by exposure to steam at 100°C for 2 hours. The insoluble gel content of the crosslinked samples is 76% and the Swelling Index Q is equal to 8.

These results show that operating in accordance with the present invention crosslinking time is considerably reduced (2 hours instead of 48 hours) and the following advantages are achieved, compared with products obtained by conventional methods:

a) the grafting yield is higher,

b) the crosslinked articles have a lower Swelling Index Q and consequently are crosslinked with a more uniform crosslinked density,

c) the crosslinked articles have a higher insoluble gel content and consequently have a higher degree of crosslinking.

Example 5

Crosslinkable samples are prepared employing the procedure of Example 4 except that after compression molding the samples are preheated to 100°C and then crosslinked in a microwave oven (Phillips type 2010 C from which the rotating plate has been removed) by exposure for 6 minutes to microwaves having a frequency of 2450 MHz and an output power of 2.1 kw.

After cooling, the insoluble gel content of the samples is determined, which amounts to 73%, and also the Swelling Index Q which is equal to 7.5.

The above results clearly show that:

a) the compositions obtained in accordance with the present invention are crosslinkable by exposure to microwave radiation and crosslinking takes place in considerably shorter times than those of conventional methods,

b) the crosslinked articles are characterized by a higher degree of crosslinking and a lower Swelling Index i.e. by a more uniform crosslinking density.

Example 6

In a tumble mixer the following are mixed:

95 parts by weight of a silane grafted HDPE (commercially denominated Polydan PEG 1®/nat.T produced by Padanaplast),

5 parts by weight of a Masterbatch consisting of

2.5 parts by weight of dehydrated zeolite 4A (a molecular sieve commercially denominated Baylith T® produced by Bayer),

0.05 parts by weight of dibutyltin dilaurate,

2.45 parts by weight of EHM 6001 HDPE® produced by Phillips having a density of 0.96 $g/cm^3$ and a Melt Flow Index=0.15 g/10′ ASTM 1238/E.

The mixture is fed to a twin screw laboratory extruder, Werner Pfleiderer ZK-28 with both screws revolving in the same sense, and homogenised at temperatures between 165°C and 180°C being finally granulated with air cooling.

By compression molding of the granules a 3 mm thick sheet is obtained from which 20×20 mm samples are cut which are then immersed in water at 90°C for 2 hours.

The degree of crosslinking, as measured by extraction according to method IEC, was found to be 72%.

Example 7

In a tumble mixer the following are mixed:

100 parts by weight of base resin consisting of ethylenevinylacetate copolymer (commercially denominated Baylon V® 10 H460 produced by Bayer A.G.) containing 8.5% vinyl acetate, effective density=0.928 g/cm³, Melt Flow Index=1.5 DIN 537 35,

1.5 parts by weight of stearic acid amide,

0.1 part by weight of a sulfur containing phenolic antioxidant (trade name Irganox 1035 produced by Ciba Geigy),

to which 2.5 parts by weight of vinyl triethoxysilane are added (trade name A151 produced by Union Carbide) in which 0.21 parts by weight of dicumyl peroxide have been previously dissolved.

The mixture is then homogenised and granulated in a single screw extruder, which has L/D=25 and 60 mm diameter screw, at temperatures between 130° and 180°C.

95 parts by weight of the above silane-grafted granules are now mixed with 5 parts by weight of a Masterbatch consisting of 3.45 parts of the same EVA base resin and:

1.5 parts by weight of type 4A hydrated zeolite in powder form (trade name Sipernat 44® produced by Degussa),

0.05 parts by weight of dibutyltin dilaurate.

The resulting mixture is fed to a twin screw extruder (model LMP-C27; L/D=16.6; screw diameter=90 mm) fitted with a die head having an outlet section with 9.5 mm inside diameter and 12.5 mm outside diameter. At about one third of the screw-length 30 parts by weight of a physical blowing agent, consisting of dichlorotetrafluoroethane, are injected.

The cut temperature of the molten material is about 95°C.

The expanded tubular article obtained has the following characteristics:

I.D. 35 mm
O.D. 50 mm
density 38 kg/m³.

The above foamed sheath, just after extrusion-expansion, exhibits a degree of crosslinking, as measured by extraction according to the IEC method, of 25%.

After conditioning in ambient air for one week the degree of crosslinking is 60%.

## Claims

1. Compositions comprising polyolefins which have been modified by grafting with unsaturated hydrolysable silanes and comprising a crystalline zeolite chosen among types 3A, 4A, 5A, X, Y, P or hydroxysodalite and which are present in powder form, wherein at least 80% by weight of the particles have a dimension between 1 and 15 micrometers, the zeolite amount being 0,5 to 10 parts by weight per 100 parts of polyolefin, said compositions being suitable for shaping particles which are cross-linkable, after shaping, by exposure to water in liquid or vapor phase or exposure to microwaves.

2. Compositions claimed in claim 1, characterised by the fact that the zeolite is in an activated state obtained by heat treatment which causes total or partial dehydration.

3. Compositions as claimed in claim 1 characterized further by the fact that they contain a coagent for the silane crosslinking, consisting of an arylcarboxylic or arylsulphonic acid having a melting point higher than that of the initial polyolefin, 1—25 parts by weight of acid being present for 100 parts of zeolite, said acid having possibly but not necessarily been previously combined with the zeolite.

4. Compositions as claimed in claim 1 which also contain a silanol condensation catalyst such as an organic compound of tin.

5. Compositions as claimed in claim 2, characterised by the fact that polyolefins are used which have been modified by grafting an unsaturated silane, which has previously been combined with a partially or totally dehydrated zeolite, said grafting having been carried out at 160° to 250°C in the presence of a peroxide radical initiator.

6. Articles based on crosslinked polymers obtained from polymeric compositions as claimed in claim 1 by shaping and subsequent crosslinking by exposure to humidity and/or exposure to microwave radiation, possibly but not necessarily in the presence of conventional silane crosslinking Catalysts.

7. Articles as claimed in claim 6 characterized by the fact that crosslinking is effected by exposure to microwaves having frequencies between $10^9$ and $10^{12}$ Hz.

## Patentansprüche

1. Zusammensetzungen umfassend Polyolefine, die durch Pfropfen mit ungesättigten hydrolysierbaren Silanen modifiziert wurden, und einen kristallinen Zeolith ausgewählt aus den Arten 3A, 4A, 5A, X, Y, P oder Hydroxysodalit, die in Pulverform vorhanden sind, wobei mindestens 80 Gew.% der Teilchen eine Dimension von 1 bis 15 µm aufweisen und der Zeolithanteil 0,5 bis 10 Gewichtsteile pro 100 Teile Polyolefin beträgt, welche Zusammensetzungen zum Formen von Gegenständen geeignet sind, die nach dem Formen vernetzbar sind, indem sie Wasser in flüssiger Phase oder Dampfphase oder Mikrowellen ausgesetzt werden.

2. Zusammensetzungen, wie in Anspruch 1 beansprucht, dadurch gekennzeichnet, daß sich der Zeolith in aktiviertem Zustand befindet, der durch Wärmebehandlung erzielt wird, welche eine vollständige oder teilweise Dehydratisierung bewirkt.

3. Zusammensetzungen, wie in Anspruch 1 beansprucht, dadurch gekennzeichnet, daß sie ein Comittel für die Silanvernetzung enthalten, das aus einer Arylcarbon- oder Arylsulfonsäure mit einem Schmelzpunkt besteht, der höher ist als jener des Ausgangspolyolefins, wobei 1 bis 25 Gewichtsteils Säure pro 100 Teile Zeolith vorhanden sind, wobei die Säure vorher gegebenenfalls,

aber nicht unbedingt, mit dem Zeolith vereinigt wurde.

4. Zusammensetzungen, wie in Anspruch 1 beansprucht, die auch einen Silanolkondensationskatalysator, wie eine organische Zinnverbindung, enthalten.

5. Zusammensetzungen, wie in Anspruch 2 beansprucht, dadurch gekennzeichnet, daß Polyolefine eingesetzt werden, die durch Pfropfen mit einem ungesättigten Silan modifiziert wurden, das vorher mit einem teilweise oder vollständig dehydratisierten Zeolith vereinigt wurde, wobei das Pfropfen bei 160 bis 250°C in Anwesenheit eines Peroxidradikalinitiators durchgeführt wurde.

6. Gegenstände auf Basis von vernetzten Polymeren, erhalten aus polymeren Zusammensetzungen, wie in Anspruch 1 beansprucht, durch Formen und Anschließendes Vernetzen, indem sie Feuchtigkeit ausgesetzt und/oder Mikrowellenbestrahlung unterworfen werden, gegebenenfalls, aber nicht unbedingt, in Anwesenheit von herkömmlichen Silanvernetzungskatalysatoren.

7. Gegenstände, wie in Anspruch 6 beansprucht, dadurch gekennzeichnet, daß das Vernetzen bewirkt wird, indem sie Mikrowellen mit Frequenzen von $10^9$ bis $10^{12}$ Hz ausgesetzt werden.

**Revendications**

1. Compositions comprenant des polyoléfines qui ont été modifiées par greffage avec des silanes hydrolysables insaturés et comprenant une zéolite cristalline choisie parmi les types 3A, 4A, 5A, X, Y, P ou hydroxysodalite et qui sont présentes sous forme de poudre, dans lesquelles au moins 80% en poids des particules ont une dimension comprise entre 1 et 15 microns, la quantité de zéolite étant de 0,5 à 10 parties en poids pour 100 parties de polyoléfine, ces compositions convenant pour des articles façonnés qui sont réticulables, après façonnage, par exposition à l'eau en phase liquide ou vapeur ou par exposition aux microondes.

2. Compositions selon la revendication 1, caractérisées par le fait que la zéolite est dans un état activé obtenu par traitement thermique qui cause la déshydratation totale ou partielle.

3. Composition selon la revendication 1, caractérisées en outre par le fait qu'elles contiennent un coagent pour la réticulation des silanes, constitué d'un acide arylcarboxylique ou arylsulfonique ayant un point de fusion plus élevé que celui de la polyoléfine initiale, 1—25 parties en poids de l'acide étant présentes pour 100 parties en poids de zéolite, cet acide ayant éventuellement, mais non nécessairement, été combiné au préalable avec la zéolite.

4. Compositions selon la revendication 1, qui contiennent aussi un catalyseur de condensation des silanols tel qu'un composé organique de l'étain.

5. Compositions selon la revendication 2, caractérisées par le fait qu'on utilise des polyoléfines qui ont été modifiées par greffage d'un silane insaturé, qui a été combiné au préalable avec une zéolite partiellement ou totalement déshydratée, ce greffage ayant été effectué à 160 à 250°C, en présence d'un agent d'amorçage radicalaire à base de peroxyde.

6. Articles basés sur des polymères réticulés obtenus à partir de compositions polymères selon la revendication 1, par façonnage puis réticulation par exposition à l'humidité et/ou exposition à un rayonnement de microondes, éventuellement mais non nécessairement en présence de catalyseurs de réticulation de silane classiques.

7. Articles selon la revendication 6, caractérisés par le fait que la réticulation est effectuée par exposition à des microondes ayant des fréquences comprises entre $10^9$ et $10^{12}$ Hz.